# EUROPEAN PATENT SPECIFICATION

(11) **EP 1 364 718 B1**
(45) Date of publication and mention of the grant of the patent: **10.10.2007**
(21) Application number: 02711878.5
(22) Date of filing: 31.01.2002
(51) Int. Cl.: B05B 5/16, B05B 1/06, B05B 7/06, B05B 7/08, B01J 13/04

(54) **DEVICE AND METHOD FOR PRODUCING STATIONARY MULTI-COMPONENT LIQUID CAPILLARY STREAMS AND MICROMETRIC AND NANOMETRIC SIZED CAPSULES**
VORRICHTUNG UND VERFAHREN ZUR HERSTELLUNG VON STATIONÄREN MEHRKOMPONENTENFLÜSSIGKEITS-KAPILLARSTRÖMEN UND KAPSELN IN MIKROMETER- UND NANOMETERGRÖSSE
DISPOSITIF ET PROCEDE PERMETTANT D'OBTENIR DES JETS LIQUIDES COMPOSES MULTICOMPOSANTS STATIONNAIRES ET DE CAPSULES AUX DIMENSIONS MICRO ET NANOMETRIQUES

(30) Priority: 31.01.2001 ES 200100231
(43) Date of publication of application: 26.11.2003
(73) Proprietor: UNIVERSIDAD DE SEVILLA, 41013 Sevilla (ES); Universidad de Malaga, 29071 Malaga (ES)
(72) Inventor: BARRERO RIPOLL, Antonio, E-41018 Sevilla (ES); GANAN CALVO, Alfonso, E-41005 Sevilla (ES); GONZ LEZ LOSCERTALES, Ignacio, E-29018 Málaga (ES); CORTIJO BON, Raul, E-29018 Málaga (ES)
(74) Representative: Temino Ceniceros, Ignacio
(86) International application number: PCT/ES2002/000047
(87) International publication number: WO 2002/060591

(56) References cited:
- WO-A1-99/30832
- CH-A5- 563 807
- FR-A1- 2 776 538

## Description

### OBJECT OF THE INVENTION

The object of the present invention is a procedure to generate electrified compound jets of several immiscible liquids with diameters ranging from a few tens of nanometers to hundred of microns as well as the relatively monodisperse aerosol of compound droplets resulting from the break up of the jets by varicose instabilities. An outer liquid enclosing an inner one (or several ones) is the typical structure of such droplets.

Liquids are injected at appropriate flow rates throughout metallic needles connected to high voltage supplies. The needles can be arranged either concentrically or one of them surrounding the others. Moreover, if the electrical conductivity of one or more liquid is sufficiently high, then the liquid can be charged through its bulk. In that case a non-metallic needle (i.e. silica tube) can be used to inject the liquid.

The device and procedure of the present invention are applicable to fields such as Material Science, Food Technology, Drug Delivery, etc. In fact, this procedure can be of interest in any field or technological application where the generation and control of compound jets of micro and nanometric size play an essential role of the process.

### STATE OF THE ART

In this invention, the electro hydrodynamic (EHD) forces are used to generate coaxial jets and to stretch them out to the desired sizes. For appropriate operating conditions, a liquid flow rate, in the form of a micro/nanometric-sized jet, is issued from the vertex of a Taylor cone. For appropriate operating conditions, a liquid flow rate, in the form of a micro/nanometric jet, is issued from the vertex of a Taylor cone. The break up of this jet gives rise to an aerosol of charged droplets, which is called electrospray. This configuration is widely known as electrospray in the cone-jet mode (M. Cloupeau and B. Prunet-Foch, J. Electrostatics, 22, 135-159, 1992). The scaling laws for the emitted current and the droplet size of the electrospray are given in the literature (J. Fernández de la Mora & I. G. Loscertales, J. Fluid Mech. 260, 155-184, 1994; A.M. Gañán-Calvo, J. Dávila & A. Barrero, J. Aerosol Sci., 28, 249-275, 1997, A. M. Gañán-Calvo, Phys. Rev. Lett. 79, 217-220, 1997; R.P.A. Hartman, D.J Brunner, D.M.A. Camelot, J.C.M. Marijnissen, & B. Scarlett, J. Aerosol Sci. 30, 823-849, 1999). Electrospray is a technique which has satisfactory proved its ability to generate steady liquid jets and monodisperse aerosols with sizes ranging from a few nanometers to hundred of microns (I.G. Loscertales & J. Fernández de la Mora, J. Chem. Phys. 103, 5041-5060, 1995.). On the other hand, in all reported electrospray experiments, a unique liquid (or solution) forms the Taylor cone, except in the procedure described in the US 5122670 patent (and sub-sequent patents: US4977785, US4885076, and US575183). In the first patent, "Multilayer flow electrospray ion source using improved sheath liquid (1991)", two or more miscible liquids are properly injected to be mixed in the Taylor cone to improve the transmission of ions, and the stability and sensitivity of a mass spectrometer.

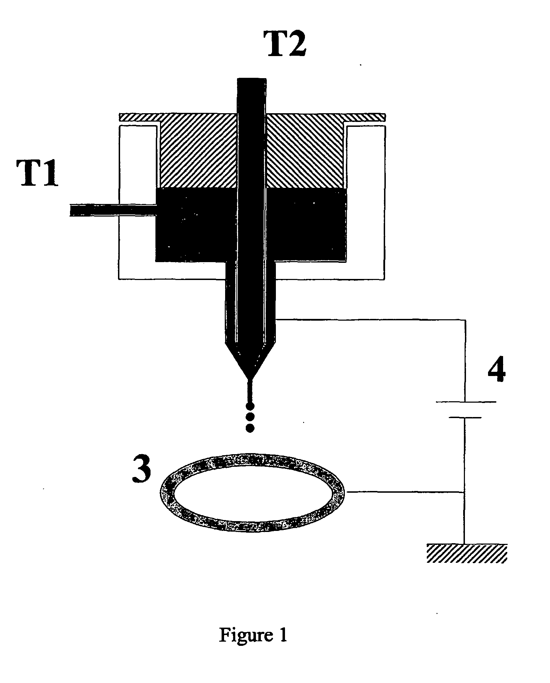

The novelty of the present invention lies on the use of two or more immiscible liquids (or poorly miscible) to form, by means of EHD forces, a structured Taylor cone surrounded by a dielectric atmosphere (gas, liquid, or vacuum), see figure 1. An outer meniscus surrounding the inner ones forms the structure of the cone. A liquid thread is issued from the vertex of each one of the menisci in such a way that a compound jet of co-flowing liquids is eventually formed. The structured, highly charged micro/nanometric jet, which is issued from the vertex of the Taylor cone, breaks up eventually forming a spray of structured, highly charged, monodisperse micro/nanometric droplets. The term *structured jet* as used herein refers to either quasi-cylindrical coaxial jets or a jet surrounding the others. The outer diameter of the jet ranges from 50 microns to a few nanometers. The term *spray of structured, highly charged, monodisperse, micro*/*nanometric droplets* as used herein refers to charged droplets formed by concentric layers of different liquids or by an outer droplet of liquid surrounding smaller droplets of immiscible liquids (or emulsions). The outer diameter of the droplets ranges from 100 microns to a few of nanometers.

An advantage of the present invention lies on the fact that the resulting droplets have an uniform size, and that, depending of the properties of the liquids and the injected flow rates, such a size can be easily varied from tens of microns to a few nanometers.

Another advantage of this invention results from the fact that the jet break up gives rise to structured micro/nanometric droplets. In some particular applications, the outer liquid is a solution containing monomers, which under appropriate excitation polymerize to produce micro/nanometric capsules.

In those cases where uncharged droplets are required, the aerosol can be easily neutralized by corona discharge.

### DESCRIPTION OF THE INVENTION

The objects of the present invention are the procedure and the device to generate steady compound jets of immiscible liquids and capsules of micro and nanometric size. The device consists of a number *N* of feeding tips of *N* liquids, such that a flow rate *Qᵢ* of the *i-th* liquid flows through the *i-th* feeding tip, where *i* is a value between *1* and *N.* The feeding tips are arranged concentrically and each feeding tip is connected to an electric potential *Vᵢ* with respect to a reference electrode. The *i-th* liquid that flows through the *i-th* feeding tip is immiscible or poorly miscible with liquids *(i*+*1)-th* and *(i-1)-th.* An electrified capillary structured meniscus with noticeable conical shape forms at the exit of the feeding tips. A steady capillary coaxial jet, formed by the *N* liquids, such that the i-th liquid surrounds the *(i*+*1)-th* liquid, issues from the cone apex. Furthermore, such capillary jet has a diameter ranging typically from 100 microns and 15 nanometers. This diameter is much smaller than the diameters of the feeding tips of the *N* liquids.

The feeding tips may be also arranged requiring that only the outer liquid surround the rest of the feeding tips. In this case, at the exit of the feeding tips, it is formed an electrified capillary meniscus with noticeable conical shape, whose apex issues an steady capillary compound jet formed by the *N* co-flowing liquids, in such a way that liquid *1* surrounds the rest of the liquids.
The N feeding tips of the device have diameters that may vary between *0,01mm* and *5 mm.*
The flow rates of the liquids flowing through the feeding tips may vary between *10⁻¹⁷ m³*/*s* and *10⁻⁷ m³*/*s.*
When the distance between the feeding tip and the reference electrode is between *0,01mm* and *5cm,* the applied electric potential has to be between *10 V* and *30 KV.*

In the particular case in which *N*=*2,* the device object of the present invention comprises:
a) A feeding tip *1* through which liquid *1* flows at a flow rate *Q₁* and it is connected to an electric potential *V₁.*
b) A feeding tip *2* through which liquid *2* flows at a flow rate *Q₂* and it is connected to an electric potential *V₂.*
Arranged such that the feeding tip *2* is surrounded by liquid *1* and such that *V₁* and *V₂* are differential values with respect to an electrode connected to a reference potential. Liquids *1* and *2* are immiscible or poorly miscible.
An electrified capillary meniscus with noticeable conical shape forms at the exit of the feeding tips. A steady capillary jet formed by liquids *1* and *2,* such that liquid *1* completely surrounds liquid *2* issues from the cone apex. Such capillary jet has a diameter, which may be between 100 microns and 15 nanometers, which is smaller than the characteristic diameter of the electrified capillary liquid meniscus from which it is emitted.

The procedure object of the present invention will produce steady compound liquid jets and capsules of micro and nanometric size by flowing *N* flow rates *Qᵢ* of different liquids through each of the N feeding tips of the device previously described such that the *i-th* liquid which flows through the *i-th* feeding tip, surrounds the *(i*+*1)-th* feeding tip, and it is immiscible o poorly miscible with liquids *(i-1)-th* and *(i*+*1)-th.* At the exit of the feeding points it is formed an electrified capillary liquid meniscus with noticeable conical shape whose apex issues an steady capillary coaxial jet formed by the N liquids, such that the *i-th* liquid surrounds the *(i*+*1)-th* liquid. Such capillary jet has a diameter, which may be between *100* microns and *15* nanometers. This diameter is considerably smaller than the characteristic diameter of the electrified capillary liquid meniscus from which is emitted. Capsules whose size may vary between 100 microns and 15 nanometers are formed after spontaneous jet break up.

This procedure may be also realized but requiring that only the external liquid surrounds all the feeding tips. In that case, an electrified capillary liquid meniscus is formed, whose shape is noticeably conical, and from whose apex issues a steady capillary jet formed by the *N* co-flowing liquids, such that liquid *1* surrounds the rest of liquids.

Finally, they are also object of the present invention the multilayered capsules spontaneously formed after the break up of the capillary jet generated by the device and procedure here mentioned.

### BRIEF DESCRIPTION OF THE FIGURE

Figure 1: Sketch of the device used to produce compound liquid jets of micro and nanometric size.

### DETAILED DESCRIPTION OF THE INVENTION

On the foregoing, we described two possible configurations that allow setting up a flow of two immiscible liquids that, by the unique action of the electro hydrodynamic (EHD) forces, results in the formation of a steady, structured, micro/nanometric sized capillary jet. This structured micro/nanometric sized capillary jet is immersed in a dielectric atmosphere (immiscible with the outermost liquid forming the jet) that might be a gas, a liquid or vacuum.

The basic device used in both configurations comprises: (1) a mean to feed a first liquid *1* through a metallic tube *T₁,* whose inner diameter ranges approximately between *1* and *0,4 mm,* respectively; (2) a mean to feed a second liquid *2,* immiscible with liquid *1,* through a metallic tube *T₂,* whose outer diameter is smaller than the inner diameter of *T₁.* In this case, *T₁* and *T₂* are concentric. The end of the tubes does not need to be located at the same axial position; (3) a reference electrode, a metallic annulus for instance, placed in front of the needle exits at a distance between *0.01* and *50 mm;* the axis of the hole of the annulus is aligned with the axis of *T₁*; (4) a high voltage power supply, with one pole connected to *T₁* and the other pole connected to the reference electrode. *T₁* and *T₂* might not be connected to the same electric potential. All the elements are immersed in a dielectric atmosphere that might be a gas, a liquid immiscible with liquid *1*, or vacuum. A part of the generated aerosol, or even the structured jet, may be extracted through the orifice in (3) to characterize it or to process it.

The EHD forces must act, at least, on one of the two liquids, although they may act on both. We term *driver liquid* the one upon which the EHD forces act to form the Taylor cone. In the first configuration, the *driver liquid* flows through the annular space left between *T₁* and *T₂,* whereas in the second configuration the *driver liquid* flows through *T₂,* and the second liquid flows through the annular gap between *T₁* and *T₂.* In any case, the electrical conductivity of the *driver liquid* must have a value sufficiently high to allow the formation of the Taylor cone.

Referring to the first configuration, when liquid *1* (the *driver liquid*) is injected at an appropriate flow rate *Q₁* and an appropriate value of the electric potential difference is applied between *T₁* and (3) and, liquid *1* develops a Taylor cone, whose apex issues a steady charged micro/nanometric jet (steady cone-jet mode). The characteristic conical shape of the liquid meniscus is due to a balance between the surface tension and the electric forces acting simultaneously and the meniscus surface. The liquid motion is caused by the electric tangential stress acting on the meniscus surface, pulling the liquid towards the tip of the Taylor cone. At some point, the mechanical equilibrium just described fails, so that the meniscus surface changes from conical to cylindrical. The reasons behind the equilibrium failure might be due, depending on the operation regime, to the kinetic energy of the liquid or to the finite value of the liquid electrical conductivity. The liquid thus ejected due to the EHD force, must be continuously made up for an appropriate injection of liquid through *T₁* in order to achieve a steady state; let *Q₁* be the flow rate fed to *T₁.* The stability of this precursor state may well be characterized by monitoring the electric current *I* transported by the jet and the aerosol collected at (3). Depending on the properties of liquid *1* and on *Q₁,* the liquid motion inside the Taylor cone may be dominated by viscosity, in which case, the liquid velocity everywhere inside the cone is mainly pointing towards the cone tip. Otherwise, the flow inside the cone may exhibit strong re-circulations, which must be avoided to produce structured micro/nanometric jets. Provided the flow is dominated by viscosity, one may then proceed to form the structured micro/nanometric jet. To do that, one must continuously supply liquid *2* through *T₂.* The meniscus of liquid *2,* which develops inside the Taylor cone formed by liquid 1, is sucked towards the cone tip by the motion of liquid *1.* Under certain operation conditions, which depend on the properties of both liquids (and on the liquid-liquid properties), the meniscus of liquid *2* may develop a conical tip from which a micro/nanometric jet is extracted by the motion of liquid *1.* In this situation, there may exist regimes where the jet of liquid *2* flows coaxially with liquid *1.* As before, liquid *2* must continuously be supplied to *T₂* (say at a flow rate *Q₂*) in order to achieve a steady state.

When the device operates in the second configuration, the procedure is analogous, except that the motion of the *driver liquid* does not need to be dominated by viscosity.

Our experiments suggest that formation of coaxial liquid jets requires that the values of the surface tension of the different fluid pairs appearing in the problem satisfy the inequality σₐᵢ - σₐₒ > σₒᵢ, where σₐᵢ is the surface tension of liquid *2* and the dielectric atmosphere, σₐₒ is the surface tension of liquid I and the dielectric atmosphere, and σₒᵢ is the interfacial tension liquid *1*-liquid *2,* respectively.

To give an idea of the typical values of the different parameters appearing in the process, the next table collects experimental measurements of the electric current transported by the jet for different flow rates of the inner liquid keeping fixed the flow rate of the outer liquid.

**Q₁ = 50 µl/min**

| | | | | | | |
|---|---|---|---|---|---|---|
| *Q₂* (µl/min.) | 0.67 | 0.83 | 1.17 | 1.50 | 1.84 | 2.17 |
| *I* (µAmp.) | 1.1 | 1.3 | 1.5 | 1.7 | 1.9 | 2.0 |

Notice that in this example, corresponding to the case where *Q₁* is much larger than *Q₂,* the value of the current *I* follows the well-known electrospray law *I∝Q₂*^{*1*/}*².*

To produce nanometric capsules through the procedure of the present invention a photopolymer may be used as external liquid. Indeed, the break up of the structured jet by the action of capillary instabilities gives place to the formation of an aerosol of structured droplets which, under the action of a source of ultraviolet light, allows to encapsulate the inner liquid.

## Claims

1. Device to produce steady compound multi-component liquid jets and micro and nanometric sized capsules, consisting of a number *N* of feeding tips of *N* liquids, such that the *i-th* liquid is injected at a flow rate *Qᵢ* through the *i-th* tip, where *i* varies between *1* and *N and N being equal or larger than 2; wherein* the feeding tips are arranged such that the *(i-1)-th* liquid surrounds the *i-th* tip, and each tip is connected to an electrical potential *Vᵢ* with respect to a reference electrode; *wherein* the *i-th* liquid, which flows trough the i-th tip, is immiscible or poorly miscible with liquids *(i*+*1)-th* and *(i-1)-th*; *wherein* an electrified capillary liquid meniscus with a noticeable conical shape forms at the feeding points exit in such a way that from the cone apex issues a steady capillary jet made up of the *N* liquids, such that the *(i-1)-th* liquid surrounds the *i-th* liquid, and such that the diameter of the capillary jet has a value between *100* microns and *15* nanometers which is much smaller than the characteristic diameter of the liquid meniscus from which the jet is emitted.

2. **-** Device to produce steady compound multicomponent liquid jets and micro and nanometric sized capsules, consisting of a number *N* of feeding tips of *N* liquids, such that the *i-th* liquid is injected at a flow rate *Qᵢ* through the *i-th* tip, where *i* varies between *1* and *N and N being equal or larger than 2; wherein* the feeding tips are arranged such that liquid *1* surrounds all the other feeding points *and* liquid *1* is immiscible or poorly miscible with the rest of liquids; *wherein* each feeding point is connected to an electrical potential *Vᵢ,* where *i* varies from to *N,* respect to a reference electrode; *wherein* an electrified capillary liquid meniscus with a noticeable conical shape forms at the feeding points exit in such a way that from the cone apex issues a steady capillary jet made up of the *N* liquids, so that liquid *1* surrounds the rest of liquids, and such that the diameter of this capillary jet has a value between 100 microns and 15 nanometers which is much smaller than the characteristic diameter of the electrified liquid meniscus from which the jet is emitted.

3. **-** Device to produce steady compound multicomponent liquid jets and micro and nanometric sized capsules of claims **1** and **2,** where the diameters of the N feeding tips have values between *0,01* mm and *5* mm.

4. - Device to produce steady compound multicomponent liquid jets and micro and nanometric sized capsules of claims **1-3**, where the flow rate of the liquid flowing through the outermost feeding tip has a value between *10⁻¹⁷ m3*/*s* and *10⁻⁷ m³*/*s,* and where the flow rates of the liquids flowing through each of the other feeding tips have values between *10⁻¹⁷ m³*/*s* and *10⁻⁷ m³*/*s.*

5. - Device to produce steady compound multicomponent liquid jets and micro and nanometric sized capsules of claims **1-4, characterized** such that for a separation between a feeding tip and the electrode of reference of a value between *0,01 mm* and *5 cm,* the applied electric potential has to be between *10 volts* and *30 Kvolts.*

6. **-** Device to produce steady compound bi-component liquid jet and micro and nanometric sized capsules of claims **1-5,** where the number of feeding points *N = 2,* comprising:
a) A first feeding tip *1* through which a liquid *1* flows at a rate *Q₁* connected to an electric potential *V₁.*
b) A second feeding tip *2* through which a liquid *2* flows at a rate *Q₂* connected to an electric potential *V₂*
such that the feeding tip *2* is surrounded by liquid *1,* and the values of *V₁* and *V₂* are differential values with respect to a reference electrode connected to a reference potential, such that liquids *1* and *2* are immiscible or poorly miscible, forming at the exit of the feeding tips an electrified capillary liquid meniscus with a noticeable conical shape, whose apex issues an steady capillary jet formed by both liquids *1* and *2,* such that liquid *1* completely surrounds liquid *2,* and such that the diameter of the jet has a value between *100* microns and *15* nanometers which is smaller than the characteristic diameter of the electrified capillary liquid meniscus from which it is emitted.

7. - Procedure to generate steady compound multicomponent liquid jets and micro and nanometric sized capsules of claims **1, 3, 4** and **5,** such that an *i-th* liquid at a flow rate *Q_{i flows}* through the *i-th* tip, where *i* varies between *1* and *N and N being equal or larger than 2*, and each tip is connected to an electrical potential *Vₜ* with respect to a reference electrode; *wherein* the *i-th* liquid, which flows trough the i-th tip, is immiscible or poorly miscible with liquids *(i*+*1)-th* and *(i-1)-th*; *wherein* an electrified capillary liquid meniscus with a noticeable conical shape forms at the feeding points exit in such a way that from the cone apex issues a steady capillary jet made up of the *N* liquids, such that the *(i-1)-th* liquid surrounds the *i-th* liquid, and such that the diameter of the capillary jet has a value between *100* microns and *15* nanometers which is much smaller than the characteristic diameter of the liquid meniscus from which the jet is emitted. The spontaneous break up of the jet *gives rise to* capsules with diameters between 100 microns and 15 nanometers.

8. **-** Procedure to generate steady compound multicomponent liquid jets and micro and nanometric sized capsules of claims **2, 3, 4** and **5,** such that an *i-th* liquid at a flow rate *Q_{i flows}* through the *i-th* tip, where *i* varies between *1* and *N.* The feeding tips are arranged such that liquid *1* surrounds all the other feeding points *and* liquid *1* is immiscible or poorly miscible with the rest of liquids; *wherein* each feeding point is connected to an electrical potential *Vᵢ, with i varying* from *1* to *N*, respect to a reference electrode; *wherein* an electrified capillary liquid meniscus with a noticeable conical shape forms at the feeding points exit in such a way that from the cone apex issues a steady capillary jet made up of the *N* liquids, so that liquid *1* surrounds the rest of liquids, and such that the diameter of this capillary jet has a value between 100 microns and 15 nanometers which is much smaller than the characteristic diameter of the electrified liquid meniscus from which the jet is emitted. The spontaneous break up of the jet thus forming capsules with diameters between 100 microns and 15 nanometers.

9. **-** Multicomponent and/or multilayered, *electrically charged* capsules with diameters comprised between 1000 microns and 15 nanometers, resulting from the break up of the jet generated by the procedures described in claims 7 and 8.

## Patentansprüche

1. Vorrichtung zur Herstellung von gleichmäßig vermischten mehrkomponentigen Flüssigkeitsstrahlen und Kapseln in Mikrogröße und nanometrischer Größe, bestehend aus einer Anzahl *N* von Zufuhrdüsen von *N* Flüssigkeiten, wobei die *i-te* Flüssigkeit eingespritzt wird bei einer Durchflussgeschwindigkeit *Qᵢ* durch die *i-te* Düse und *i* zwischen *1* und *N* variiert und *N und N gleich oder größer als 2 sind;* die Zufuhrdüsen sind so eingerichtet, dass die *(i-1)-te* Flüssigkeit die *i-te* Düse umgibt, und jede Düse ist angeschlossen an ein elektrisches Potenzial *Vᵢ* in Bezug auf eine Bezugselektrode; die *i-te* Flüssigkeit, die durch die *i-te* Düse fließt, ist nicht mischbar oder schlecht mischbar mit den *(i*+*1)-ten* und *(i-1)-ten* Flüssigkeiten; am Ausgang der Zufuhrstellen bildet sich ein elektrisch geladener feiner flüssiger Meniskus mit einer erkennbaren konischen Form auf eine solche Weise, dass aus dem Scheitelpunkt ein feiner gleichmäßiger Strahl austritt, der aus *N* Flüssigkeiten besteht, und zwar so, dass die *(i-1)-te* Flüssigkeit die *i-te* Flüssigkeit umgibt, und so, dass der Durchmesser des feinen Strahls einen Wert von zwischen *100* Mikronen und *15* Nanometern hat, welcher viel kleiner ist als der kennzeichnende Durchmesser des flüssigen Meniskus, aus dem der Strahl austritt.

2. Vorrichtung zur Herstellung von gleichmäßig vermischten mehrkomponentigen Flüssigkeitsstrahlen und Kapseln in Mikrogröße und nanometrischer Größe, bestehend aus einer Anzahl *N* von Zufuhrdüsen von *N* Flüssigkeiten, wobei die *i-te* Flüssigkeit eingespritzt wird bei einer Durchflussgeschwindigkeit *Qᵢ* durch die *i-te* Düse und *i* zwischen *1* und *N* variiert und *N und N gleich oder größer als 2 sind*; die Zufuhrdüsen sind so eingerichtet, dass die Flüssigkeit *1* alle anderen Zufuhrstellen umgibt und die Flüssigkeit *1* ist nicht mischbar oder schlecht mischbar mit den restlichen Flüssigkeiten; jede Zufuhrstelle ist angeschlossen an ein elektrisches Potenzial *Vᵢ,* wobei *i* von *1* bis *N* variiert in Bezug auf eine Bezugselektrode; am Ausgang der Zufuhrstellen bildet sich ein elektrisch geladener feiner flüssiger Meniskus mit einer erkennbaren konischen Form auf eine solche Weise, dass aus dem Scheitelpunkt ein feiner gleichmäßiger Strahl austritt, der aus *N* Flüssigkeiten besteht, wobei die Flüssigkeit *1* die restlichen Flüssigkeiten umgibt und der Durchmesser dieses feinen Strahls einen Wert von zwischen 100 Mikronen und 15 Nanometern hat, welcher viel kleiner ist als der kennzeichnende Durchmesser des elektrisch geladenen flüssigen Meniskus, aus dem der Strahl austritt.

3. Vorrichtung zur Herstellung von gleichmäßig vermischten mehrkomponentigen Flüssigkeitsstrahlen und Kapseln in Mikrogröße und nanometrischer Größe der Patentansprüche 1 und 2, wobei die Durchmesser der N Zufuhrdüsen Werte von zwischen *0,01* mm und *5* mm haben.

4. Vorrichtung zur Herstellung von gleichmäßig vermischten mehrkomponentigen Flüssigkeitsstrahlen und Kapseln in Mikrogröße und nanometrischer Größe der Patentansprüche 1 - 3, wobei die Durchflussgeschwindigkeit der Flüssigkeit, die durch die äußerste Zufuhrdüse fließt, einen Wert von zwischen *10⁻¹⁷ m³*/*s* und *10⁻⁷ m³*/*s* hat und die Durchflussgeschwindigkeiten der Flüssigkeiten, die durch alle anderen Zufuhrdüsen fließen, Werte von zwischen *10⁻¹⁷m³*/*s* und *10⁻⁷ m³*/*s* haben.

5. Vorrichtung zur Herstellung von gleichmäßig vermischten mehrkomponentigen Flüssigkeitsstrahlen und Kapseln in Mikrogröße und nanometrischer Größe der Patentansprüche 1 - 4, die so charakterisiert ist, dass für die Trennung zwischen einer Zufuhrdüse und der Bezugselektrode mit einem Wert von zwischen *0,01 mm* und *5 cm,* das angewendete elektrische Potenzial zwischen *10 Volt* und *30 kVolt* sein muss.

6. Vorrichtung zur Herstellung von gleichmäßig vermischten zweikomponentigen Flüssigkeitsstrahlen und Kapseln in Mikrogröße und nanometrischer Größe der Patentansprüche 1 - 5, wobei die Anzahl der Zufuhrstellen *N* = *2* ist und die Vorrichtung Folgendes enthält:
a) Eine erste Zufuhrdüse *1* durch die eine Flüssigkeit *1* mit einer Geschwindigkeit *Q₁* fließt und an ein elektrisches Potenzial *V₁* angeschlossen ist,
b) Eine zweite Zufuhrdüse *2* durch die eine Flüssigkeit *2* mit einer Geschwindigkeit *Q₂* fließt und an ein elektrisches Potenzial *V₂* angeschlossen ist,
wobei die Zufuhrdüse *2* von der Flüssigkeit *1* umgeben ist und die Werte *V₁* und *V₂* sind unterschiedliche Werte in Bezug auf eine Bezugselektrode, die an ein Bezugspotenzial angeschlossen ist, wobei die Flüssigkeiten *1* und *2* nicht mischbar oder schlecht mischbar sind und am Ausgang der Zufuhrdüsen einen elektrisch geladenen feinen flüssigen Meniskus bilden mit einer erkennbaren konischen Form, aus dessen Scheitelpunkt ein feiner gleichmäßiger Strahl austritt, der aus beiden Flüssigkeiten *1* und *2* besteht, sodass die Flüssigkeit *1* vollständig die Flüssigkeit *2* umgibt und der Durchmesser dieses Strahls einen Wert von zwischen *100* Mikronen und *15* Nanometern hat, welcher kleiner ist als der kennzeichnende Durchmesser des elektrisch geladenen feinen flüssigen Meniskus, aus dem dieser austritt.

7. Verfahren zur Bildung von gleichmäßig vermischten mehrkomponentigen Flüssigkeitsstrahlen und Kapseln in Mikrogröße und nanometrischer Größe der Patentansprüche 1, 3, 4 und 5, wobei eine *i-te* Flüssigkeit bei einer Durchflussgeschwindigkeit *Qᵢ* durch die *i-te* Düse fließt und *i* zwischen *1* und *N* variiert und *N und N gleich oder größer als 2 sind* und jede Düse angeschlossen ist an ein elektrisches Potenzial *Vᵢ* in Bezug auf eine Bezugselektrode; die *i-te* Flüssigkeit, die durch die *i-te* Düse fließt, ist nicht mischbar oder schlecht mischbar mit den *(i*+*1)-ten* und *(i-1)-ten* Flüssigkeiten; am Ausgang der Zufuhrstellen bildet sich ein elektrisch geladener feiner flüssiger Meniskus mit einer erkennbaren konischen Form auf eine solche Weise, dass aus dem Scheitelpunkt ein feiner gleichmäßiger Strahl austritt, der aus *N* Flüssigkeiten besteht, wobei die *(i-1)-te* Flüssigkeit die *i-te* Flüssigkeit umgibt und der Durchmesser des feinen Strahls einen Wert von zwischen *100* Mikronen und *15* Nanometern hat, welcher viel kleiner ist als der kennzeichnende Durchmesser des flüssigen Meniskus, aus dem der Strahl austritt. Der spontane Abbruch des Strahls führt zur Bildung von Kapseln mit Durchmessern von zwischen 100 Mikronen und 15 Nanometern.

8. Verfahren zur Bildung von gleichmäßig vermischten mehrkomponentigen Flüssigkeitsstrahlen und Kapseln in Mikrogröße und nanometrischer Größe der Patentansprüche 2, 3, 4 und 5, wobei eine *i-te* Flüssigkeit bei einer Durchflussgeschwindigkeit *Qᵢ* durch die *i-te* Düse fließt und *i* zwischen *1* und *N* variiert. Die Zufuhrdüsen sind so eingerichtet, dass die Flüssigkeit *1* alle anderen Zufuhrstellen umgibt und die Flüssigkeit *1* nicht mischbar oder schlecht mischbar mit den restlichen Flüssigkeiten ist; jede Zufuhrstelle ist angeschlossen an ein elektrisches Potenzial *Vᵢ, wobei i* von *1* bis *N variiert* in Bezug auf eine Bezugselektrode; am Ausgang der Zufuhrstellen bildet sich ein elektrisch geladener feiner flüssiger Meniskus mit einer erkennbaren konischen Form auf eine solche Weise, dass aus dem Scheitelpunkt ein feiner gleichmäßiger Strahl austritt, der aus *N* Flüssigkeiten besteht, wobei Flüssigkeit *1* die restlichen Flüssigkeiten umgibt und der Durchmesser dieses feinen Strahls einen Wert von zwischen 100 Mikronen und 15 Nanometern hat, welcher viel kleiner ist als der kennzeichnende Durchmesser des elektrisch geladenen flüssigen Meniskus, aus dem der Strahl austritt. Der spontane Abbruch des Strahls führt zur Bildung von Kapseln mit Durchmessern von zwischen 100 Mikronen und 15 Nanometern.

9. Mehrkomponentige und/oder mehrschichtige elektrisch geladene Kapseln mit Durchmessern, die bei zwischen 1000 Mikronen und 15 Nanometern liegen, und sich ergeben aus dem Abbruch des Strahls, der durch die Verfahren entsteht, die in den Patentansprüchen 7 und 8 beschrieben werden.

## Revendications

1. - Dispositif permettant d'obtenir des jets liquides composés multi-composants stationnaires et des capsules aux dimensions micro et nanométriques, consistant en un nombre *N* de buses d'alimentation de *N* liquides, tel que le *i-^{e}* liquide est injecté à un débit *Qᵢ* dans la *i-^{e}* buse, où *i* varie entre *1* et *N et N est égal ou supérieur à 2 ; **caractérisé en ce que*** les buses d'alimentation sont disposées de sorte que le *(i-l)-^{e}* liquide entoure la *i-^{e}* buse, et chaque buse est connectée à un potentiel électrique *Vᵢ* par rapport à une électrode de référence; ***caractérisé en ce que*** le *i-^{e}* liquide qui circule dans la buse *i-^{e}* est immiscible ou peu miscible avec les *(i*+*1)-^{e}* et *(i-1)-^{e}* liquides; ***caractérisé en ce* qu'**un ménisque capillaire liquide électrifié de forme conique visible se forme à la sortie des pointes d'alimentation de telle manière que le sommet du cône émet un jet capillaire stationnaire constitué par les *N* liquides, tel que le *(i-1)-^{e}* liquide entoure le *i-^{e}* liquide, et tel que le diamètre du jet capillaire est compris entre *100* microns et *15* nanomètres, une valeur nettement inférieure au diamètre caractéristique du ménisque liquide d'où le jet est émis.

2. - Dispositif permettant d'obtenir des jets liquides composés multi-composants stationnaires et des capsules aux dimensions micro et nanométriques, consistant en un nombre *N* de buses d'alimentation de *N* liquides, tel que le *i-^{e}* liquide est injecté à un débit *Qᵢ* dans la *i-^{e}* buse, où *i* varie entre *1* et *N et N est égal ou supérieur à 2 ; **caractérisé en ce que*** les buses d'alimentation sont disposées de sorte que le liquide *1* entoure tous les autres pointes d'alimentation et le liquide *1* est immiscible ou peu miscible avec les autres liquides ; ***caractérisé en ce que*** chaque pointe d'alimentation est connectée à un potentiel électrique *Vᵢ,* où *i* varie de *1* à *N* par rapport à une électrode de référence ; ***caractérisé en ce qu*'**un ménisque capillaire liquide électrifié de forme conique visible se forme à la sortie des pointes d'alimentation de telle manière que le sommet du cône émet un jet capillaire stationnaire constitué par les *N* liquides, tel que le liquide *l* entoure les autres liquides, et tel que le diamètre de ce jet capillaire est compris entre *100* microns et *15* nanomètres, une valeur nettement inférieure au diamètre caractéristique du ménisque liquide électrifié d'où le jet est émis.

3. - Dispositif permettant d'obtenir des jets liquides composés multi-composants stationnaires et des capsules aux dimensions micro et nanométriques selon les revendications 1 et 2, **caractérisé en ce que** les diamètres des buses d'alimentation N sont compris entre *0,01* mm et *5* mm.

4. - Dispositif permettant d'obtenir des jets liquides composés multi-composants stationnaires et de capsules aux dimensions micro et nanométriques selon les revendications 1-3, **caractérisé en ce que** le débit du liquide circulant dans la buse d'alimentation la plus externe est compris entre *10⁻¹⁷ m³*/*s* et *10⁻⁷ m³*/*s,* et **caractérisé en ce que** les débits des liquides circulant dans chacune des autres buses d'alimentation sont compris entre *10⁻¹⁷ m³*/*s* and *10⁻⁷ m³*/*s.*

5. - Dispositif permettant d'obtenir des jets liquides composés multi-composants stationnaires et des capsules aux dimensions micro et nanométriques selon les revendications 1-4, **caractérisé en ce que** pour une distance entre une buse d'alimentation et l'électrode de référence comprise entre *0,01 mm* et *5 cm,* le potentiel électrique appliqué est compris entre *10 volts* et *30 kV.*

6. - Dispositif permettant d'obtenir des jets liquides composés bi-composants stationnaires et des capsules aux dimensions micro et nanométriques selon les revendications 1-5, **caractérisé en ce que** le nombre de pointes d'alimentation *N* = 2, comprenant :
a) Une première buse d'alimentation 1 dans laquelle un liquide *1* circule à un débit *Q₁* et connectée à un potentiel électrique *V₁.*
b) Une deuxième buse d'alimentation *2* dans laquelle un liquide *2* circule à un débit *Q₂* et connectée à un potentiel électrique *V₂.*
telles que la buse d'alimentation *2* est entourée par le liquide *1,* et les valeurs *V₁* et *V₂* sont des valeurs différentielles par rapport à une électrode de référence connectée à un potentiel de référence, et **caractérisé en ce que** les liquides *1* et *2* sont immiscibles ou peu miscibles, formant à la sortie des buses d'alimentation un ménisque capillaire liquide électrifié de forme conique visible, dont le sommet émet un jet capillaire stationnaire formé par les deux liquides *1* et 2, tel que le liquide *1* entoure complètement le liquide *2*, et tel que le diamètre du jet est compris entre *100* microns et *15* nanomètres, une valeur inférieure au diamètre caractéristique du ménisque liquide capillaire électrifié d'où le jet est émis.

7. - Procédure pour produire des jets liquides composés multi-composants stationnaires et des capsules aux dimensions micro et nanométriques selon les revendications 1, 3, 4 et 5, tel qu'un *i-^{e}* liquide circule à un débit *Qᵢ* dans la *i-^{e}* buse, où *i* varie entre *1* et *N et N est égal ou supérieur à* 2, et chaque buse est connectée à un potentiel électrique *V₁* par rapport à une électrode de référence ; ***caractérisé en ce que*** le *i-^{e}* liquide qui circule dans la *i-^{e}* buse est immiscible ou peu miscible avec les *(i*+*1)-^{e}* et *(i-l)-^{e}* liquides ; ***caractérisé en ce qu'**un* ménisque capillaire liquide électrifié de forme conique visible se forme à la sortie des pointes d'alimentation de telle manière que le sommet du cône émet un jet capillaire stationnaire constitué par les *N* liquides, tel que le *(i-l)-^{e}* liquide entoure le *i-^{e}* liquide, et tel que le diamètre du jet capillaire est compris entre *100* microns et *15* nanomètres, une valeur nettement inférieure au diamètre caractéristique du ménisque liquide d'où le jet est émis. L'interruption spontanée du jet entraîne des capsules aux diamètres compris entre 100 microns et 15 nanomètres.

8. - Procédure pour produire des jets liquides composés multi-composants stationnaires et des capsules aux dimensions micro et nanométriques selon les revendications 2, 3, 4 et 5, tel qu'un *i-^{e}* liquide circule à un débit *Qᵢ* dans la *i-^{e}* buse, où *i* varie entre *1* et *N.* Les buses d'alimentation sont disposées de sorte que le liquide *1* entoure toutes les autres pointes d'alimentation et le liquide *1* est immiscible ou peu miscible avec les autres liquides; ***caractérisé en ce que*** chaque pointe d'alimentation est connectée à un potentiel électrique *Vᵢ,* où *i* varie de *1* à *N,* par rapport à une électrode de référence ; ***caractérisé en ce qu'**un* ménisque capillaire liquide électrifié de forme conique visible se forme à la sortie des points d'alimentation de telle manière que le sommet du cône émet un jet capillaire stationnaire constitué par les *N* liquides, tel que le liquide *1* entoure les autres liquides, et tel que le diamètre de ce jet capillaire est compris entre *100* microns et *15* nanomètres, une valeur nettement inférieure au diamètre caractéristique du ménisque liquide électrifié d'où le jet est émis. L'interruption spontanée du jet entraîne des capsules aux diamètres compris entre 100 microns et 15 nanomètres.

9. - Des capsules multi-composantes et/ou multicouches, des capsules chargées électriquement aux diamètres compris entre 1000 microns et 15 nanomètres, résultant de l'interruption du jet obtenu conformément aux procédures décrites dans les revendications 7 et 8.
